# EUROPEAN PATENT APPLICATION

(11) **EP 4 786 310 A1**
(43) Date of publication of application: **05.08.2026**
(21) Application number: 24869594.2
(22) Date of filing: 29.02.2024
(51) Int. Cl.: B62D 3/10, B62D 5/04, F16H 57/12

(54) **TRANSMISSION DEVICE, STEERING MECHANISM, AND VEHICLE**

(30) Priority: 28.09.2023 CN 202311283171
(71) Applicant: BYD Company Limited, Shenzhen, Guangdong 518118 (CN)
(72) Inventor: ZHANG, Peng, Shenzhen, Guangdong 518118 (CN)
(74) Representative: Mathys & Squire
(86) International application number: PCT/CN2024/079173
(87) International publication number: WO 2025/066022

(57) **Abstract**

A transmission apparatus, a steering mechanism, and a vehicle are provided. The transmission apparatus includes a support, a bearing, a worm, and a worm gear. The bearing is disposed in an inner hole of the support. The worm extends into an inner ring of the bearing. The worm is in transmission connection with the worm gear. The support is further provided with an abutting portion. The abutting portion is capable of abutting against an outer ring of the bearing in the direction of a rotation axis of the worm. The abutting portion is configured to limit radial displacement generated during meshing transmission of the worm and the worm gear, to ensure a mating clearance between the worm gear and the worm.

## Description

This application claims priority to Chinese Patent Application No. 202311283171.5, filed with the China National Intellectual Property Administration on September 28, 2023 and entitled "TRANSMISSION APPARATUS, STEERING MECHANISM, AND VEHICLE", which is incorporated herein by reference in its entirety.

### TECHNICAL FIELD

This application relates to the field of transmissions, and in particular, to a transmission apparatus, a steering mechanism, and a vehicle including the steering mechanism.

### BACKGROUND

In the field of transmissions, in a transmission process of a worm gear and a worm, interaction between the worm gear and the worm is easy to increase a mating clearance between the worm gear and the worm, which affects transmission accuracy of the worm gear and the worm.

### SUMMARY

In view of the foregoing shortcomings of conventional technology, an objective of this application is to provide a transmission apparatus that improves transmission accuracy, and a vehicle including the transmission apparatus. Specifically, the following technical solutions are included.

According to a first aspect, an embodiment of this application provides a transmission apparatus, including a support, a bearing, a worm, and a worm gear, where the bearing is disposed in an inner hole of the support, the worm extends into an inner ring of the bearing, and the worm is in transmission connection with the worm gear; and the support is further provided with an abutting portion, the abutting portion being capable of abutting against an outer ring of the bearing in a direction of a rotation axis of the worm, and the abutting portion being configured to limit radial displacement generated during meshing transmission of the worm and the worm gear, to ensure a mating clearance between the worm gear and the worm.

In the transmission apparatus provided by this application, through the arrangement of the worm in the inner ring of the bearing that is located in the inner hole of the support, and transmission connection of the worm and the worm gear, the worm can rotate under the action of an external driving force and drive the worm gear to rotate, thereby implementing a transmission function of the transmission apparatus provided by this application.

In the transmission apparatus provided by this application, by disposing the abutting portion that abuts against the outer ring of the bearing in the direction of the rotation axis of the worm, when the worm and the worm gear rotates cooperatively and generate a deflection moment, the abutting portion is capable of abutting against the bearing to limit the radial displacement of the worm, thereby counteracting the deflection moment of the worm, ensuring the mating clearance between the worm gear and the worm, and improving transmission accuracy of the transmission apparatus provided by this application.

In an embodiment, the abutting portion includes a first abutting portion and a second abutting portion. The first abutting portion abuts against an end face of the bearing that is close to the worm gear. The second abutting portion abuts against an end face of the bearing that is away from the worm gear.

In this embodiment, by disposing the first abutting portion on a side of the end face of the bearing that is close to the worm gear, and disposing the second abutting portion on a side of the end face of the bearing that is away from the worm gear, both opposite end faces of the bearing can be abutted by the corresponding abutting portions, thereby limiting axial displacement of the bearing. In addition, based on limitation of radial displacement of the worm by the abutting portion, mating between the first abutting portion and the second abutting portion can further limit the radial displacement of the worm.

In an embodiment, in an arrangement direction of the worm gear and the worm, the first abutting portion is closer to the rotation axis of the worm gear than to a rotation axis of the worm.

In an embodiment, in an arrangement direction of the worm gear and the worm, the second abutting portion is farther away from a rotation axis of the worm gear than from the rotation axis of the worm.

In this embodiment, by disposing the first abutting portion on a side closer to the rotation axis of the worm gear than to the rotation axis of the worm, when an axial force applied by the worm gear on the worm causes the bearing to abut against the first abutting portion, the axial force can cooperate with the first abutting portion to form a reverse deflection moment, so as to counteract a deflection moment applied by the worm gear on the worm, preventing the worm from flipping around the bearing, and ensuring the mating clearance between the worm and the worm gear.

In addition, by disposing the second abutting portion on a side closer to the rotation axis of the worm gear than to the rotation axis of the worm, when the axial force applied by the worm gear on the worm causes the bearing to abut against the second abutting portion, the axial force can cooperate with the second abutting portion to form a reverse deflection moment, so as to counteract the deflection moment applied by the worm gear on the worm, preventing the worm from flipping around the bearing, and ensuring the mating clearance between the worm and the worm gear.

In an embodiment, in an arrangement direction of the worm gear and the worm, the first abutting portion is closer to the rotation axis of the worm gear than the second abutting portion.

In this embodiment, by disposing the first abutting portion and the second abutting portion in the arrangement direction of the worm gear and the worm, an axial force applied to the worm can form a reverse deflection moment under the action of the first abutting portion and/or the second abutting portion. The reverse deflection moment can counteract a deflection moment applied by the worm gear on the worm, preventing the worm from flipping around the bearing, and ensuring the mating clearance between the worm and the worm gear.

In an embodiment, there is a first distance between the first abutting portion and a rotation axis of the bearing. There is a second distance between the second abutting portion and the rotation axis of the bearing. The first distance is less than or equal to the second distance.

In this embodiment, because the distance between the second abutting portion and the rotation axis of the worm gear is longer than that between the first abutting portion and the rotation axis of the worm gear, influence of the distance between the second abutting portion and the rotation axis of the worm gear on a prevention effect of the second abutting portion on flipping of the worm is reduced by setting the second distance of the second abutting portion to be greater than or equal to the first distance of the first abutting portion. Therefore, the second abutting portion can prevent the worm from flipping, ensuring the mating clearance between the worm and the worm gear.

In an embodiment, the abutting portion is of a ring structure. The abutting portion includes an axial protrusion member. The axial protrusion member extends along the rotation axis of the bearing toward an end face of the bearing, and abuts against an end face of the outer ring of the bearing, to limit the radial displacement generated during meshing transmission of the worm and the worm gear.

In this embodiment, the abutting portion is configured as a ring structure, and is provided with the axial protrusion member extending along the rotation axis of the bearing toward an end face of the bearing, so that the axial protrusion member can abut against the end face of the bearing, and therefore, the worm and the worm gear rotate cooperatively to generate an axial force. Through an abutting effect of the axial protrusion member against the bearing, a reverse deflection moment that can counteract a deflection moment of the worm is formed, thereby limiting radial displacement of the worm, ensuring the mating clearance between the worm gear and the worm, and improving transmission accuracy of the transmission apparatus provided by this application.

In an embodiment, there are two axial protrusion members. In the arrangement direction of the worm gear and the worm, the two axial protrusion members are located on the same side of the rotation axis of the bearing, and distances between the two axial protrusion members and the rotation axis of the bearing are equal.

In this embodiment, by disposing the two axial protrusion members on the same side of the rotation axis of the bearing, and making the two axial protrusion members equidistant from the rotation axis of the bearing, when the worm gear and the worm rotate cooperatively and cause axial displacement of the bearing, the two axial protrusion members apply forces to the bearing, ensuring relatively uniform force on the bearing. In addition, it can also be ensured that a moment formed by mating between the axial protrusion member and the bearing is opposite in direction to a deflection moment generated by meshing transmission of the worm gear and the worm.

In an embodiment, the axial protrusion members are arc-shaped. The axial protrusion members are located on a side of the rotation axis of the bearing, and are circumferentially arranged around the rotation axis of the bearing.

In this embodiment, by configuring the axial protrusion members to be arc-shaped, locating the axial protrusion members on one side of the rotation axis of the bearing, and circumferentially arranging the axial protrusion members around the rotation axis of the bearing, a relatively uniform force is applied to a side of the end face of the bearing that is close to the axial protrusion member. In addition, it can also be ensured that a moment formed by mating between the axial protrusion member and the bearing is opposite in direction to a deflection moment generated by meshing transmission of the worm gear and the worm.

In an embodiment, the abutting portion further includes a radial protrusion member. The radial protrusion member protrudes in a radius direction of the bearing. The support is further provided with a mounting groove. The mounting groove is disposed in the radius direction of the bearing. The radial protrusion member is accommodated in the mounting groove, to fasten a position of the abutting portion on the support.

In this embodiment, by disposing the radial protrusion member that protrudes in the radius direction of the bearing, and disposing the mounting groove on the support, the radial protrusion member can be accommodated in the mounting groove, thereby fastening the position of the abutting portion on the support.

In an embodiment, the abutting portion is detachably connected to the support.

In this embodiment, by detachably connecting the abutting portion to the support, in a process of manufacturing the support, the abutting portion can be separately manufactured, thereby reducing manufacturing complexity of the support.

In an embodiment, the transmission apparatus further includes a buffer member. The buffer member is filled between the bearing and the support. The buffer member is configured to absorb vibration between the bearing and the support.

In this embodiment, the buffer member is disposed, and the buffer member can be filled between the bearing and the support, to absorb the vibration transmitted to a position between the bearing and the support during meshing transmission of the worm gear and the worm, thereby reducing noise generated by the vibration of the bearing and the support during operation of the transmission apparatus provided by this application.

According to a second aspect, an embodiment of this application provides a steering mechanism, including a steering input apparatus, a steering execution apparatus, and a transmission apparatus, where the steering input apparatus is in transmission connection with a worm of the transmission apparatus, and the steering execution apparatus is in transmission connection with a worm gear of the transmission apparatus.

According to a third aspect, an embodiment of this application provides a vehicle, including a steering mechanism.

It will be understood that the vehicle provided in the third aspect of this application uses the transmission apparatus provided in the second aspect of this application, and the steering mechanism provided in the second aspect of this application has the beneficial effect of improving transmission accuracy, so that the vehicle of this application has higher transmission accuracy.

### BRIEF DESCRIPTION OF DRAWINGS

FIG. 1 is a diagram of a structure of a transmission apparatus provided in an embodiment of this application;
FIG. 2 is a top view of a transmission apparatus provided in an embodiment of this application;
FIG. 3 is a diagram of analysis of force on a transmission apparatus provided in an embodiment of this application;
FIG. 4 is another diagram of analysis of force on a transmission apparatus provided in an embodiment of this application;
FIG. 5 is a diagram of analysis of force on a transmission apparatus provided in a conventional technology;
FIG. 6 is a diagram of a partial cross-sectional structure of a transmission apparatus provided in an embodiment of this application;
FIG. 7 is still another diagram of analysis of force on a transmission apparatus provided in an embodiment of this application;
FIG. 8 is yet another diagram of analysis of force on a transmission apparatus provided in an embodiment of this application;
FIG. 9 is a partial main view of a transmission apparatus provided in an embodiment of this application;
FIG. 10 is a partial exploded view of a transmission apparatus provided in an embodiment of this application;
FIG. 11 is another partial exploded view of a transmission apparatus provided in an embodiment of this application;
FIG. 12 is a diagram of another partial cross-sectional structure of a transmission apparatus provided in an embodiment of this application;
FIG. 13 is a partial enlarged view of a transmission apparatus provided in an embodiment of this application;
FIG. 14 is a diagram of still another partial cross-sectional structure of a transmission apparatus provided in an embodiment of this application;
FIG. 15 is a diagram of a structure of a steering mechanism provided in an embodiment of this application; and
FIG. 16 is a diagram of a structure of a vehicle provided in an embodiment of this application.

Reference numerals: 100-transmission apparatus; 200-steering mechanism; 300-vehicle; 201-steering input apparatus; 202-steering execution apparatus; 40-worm gear; 30-worm; 20-bearing; 21-inner ring; 22-outer ring; 10-support; 11-inner hole; 12-abutting portion; 10amounting groove; L1-first rotation axis; L2-second rotation axis; L3-third rotation axis; T1-first deflection moment; T2-second deflection moment; F1-radial force; F2-axial force; 121-first abutting portion; 121a-first axial protrusion member; 121b-first radial protrusion member; 122-second abutting portion; 122a-second axial protrusion member; 122b-second radial protrusion member; 231-first end face; 232-second end face; 100'-transmission apparatus; 40'-spring; 30'-bearing; 20'-worm; 10'-worm gear; T'-deflection moment; F1'-radial force; F2'-elastic force; D1-first distance; D2-second distance.

### DESCRIPTION OF EMBODIMENTS

For ease of understanding this application, this application will be described more comprehensively below with reference to the related accompanying drawings. Preferred implementations of this application are shown in the accompanying drawings. However, this application may be implemented in many different forms and is not limited to implementations described herein. Instead, these implementations are provided for a more thorough and comprehensive understanding of the disclosure of this application.

The following descriptions of embodiments are made with reference to additional illustrations, and are used to illustrate specific embodiments in which this application can be implemented. The serial numbers for components used herein, such as "first", and "second" are merely used to distinguish described objects and do not have any sequential or technical meaning. Terms "connection" and "linkage" stated in this application include both direct and indirect connections (linkages), unless otherwise specified. Directional terms mentioned in this application, such as "up", "down", "front", "back", "left", "right", "inner", "outer", and "lateral" are merely directions with reference to the accompanying drawings. Therefore, the directional terms used are for better and clearer explanation and understanding of this application, instead of indicating or implying that apparatuses or elements indicated must have particular orientations, and be constructed and operated in the particular orientations, so that these terms will not be construed as limiting this application.

In the description of this application, unless otherwise expressly specified and limited, the terms "mount", "connect", "link", and the like will be understood in a broad sense, such as, a fixed connection, a detachable connection, or an integral connection; a mechanical connection; or a direct connection, an indirect connection through an intermediate medium, or an internal connection of two elements. For person of ordinary skill in the art, the specific meanings of the foregoing terms in this application will be understood according to specific situations. It will be noted that in the specification, claims, and accompanying drawings of this application, the terms "first", "second" and the like are intended to distinguish different objects but do not indicate a particular order. In addition, the terms "include/comprise" "may include/comprise", "contain," or "may contain" used in this application indicate the presence of a disclosed corresponding function, operation, element, or the like, and do not limit the presence of one or a plurality of other functions, operations, elements. In addition, the term "include/comprise" or "contain" indicates the presence of a corresponding feature, number, step, operation, element, component, or a combination thereof disclosed in the specification, but does not exclude the presence or addition of one or a plurality of other features, numbers, steps, operations, elements, components, or combinations thereof, and is intended to cover a non-exclusive inclusion.

Unless otherwise defined, all technical and scientific terms used herein have the same meanings as commonly understood by person skilled in the art to which this application pertains. Terms used in the specification of this application are merely intended to describe specific implementations, but are not intended to limit this application.

This application provides a steering mechanism, including a steering input apparatus, a steering execution apparatus, and a transmission apparatus, where the transmission apparatus includes a worm gear and a worm in transmission connection, the worm is in transmission connection with the steering input apparatus, and the worm gear is in transmission connection with the steering execution apparatus. Based on transmission and mating of the worm gear and the worm, a torque output by the steering input apparatus is amplified via the transmission apparatus, and is transmitted to the steering execution apparatus. The steering execution apparatus implements a corresponding execution function of the steering structure based on the torque.

In an embodiment, the steering input apparatus includes a steering wheel. The steering execution apparatus includes wheels. The steering wheel controls a direction of the wheels via the transmission apparatus, thereby implementing a steering function of the vehicle. It will be understood that in another embodiment, the steering input apparatus and the steering execution apparatus may alternatively be other structures, which is not particularly limited in this application.

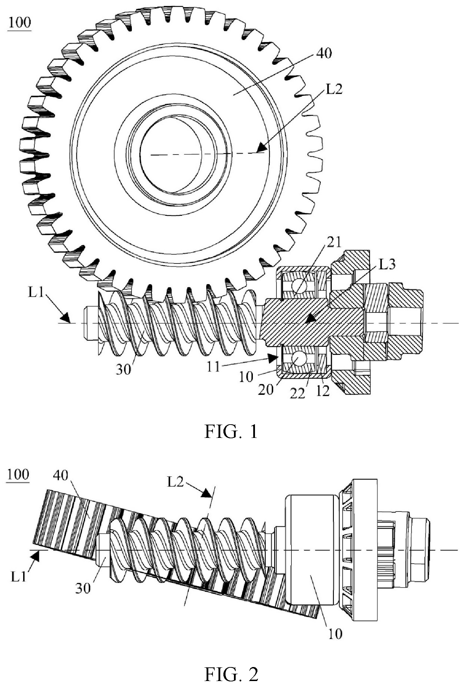

Referring to FIG. 1, FIG. 1 is a diagram of a structure of a transmission apparatus 100 provided in an embodiment of this application.

As shown in FIG. 1, the transmission apparatus 100 provided by this application includes a support 10, a bearing 20, a worm 30, and a worm gear 40. An outer ring 22 of the bearing 20 is disposed in an inner hole 11 of the support 10, so that the bearing 20 is relatively fastened in the support 10.

One end of the worm 30 extends into an inner ring 21 of the bearing 20, so that the worm 30 can rotate relative to the support 10 while the support 10 supports the worm 30. In addition, as shown in FIG. 1, a third rotation axis L3 of the bearing 20 coincides with a first rotation axis L1 of the worm 30, so that the rotation axis of the worm 30 is the same as that of the bearing 20.

The other end of the worm 30 is in transmission connection with the worm gear 40. As shown in FIG. 2, there is an included angle between the first rotation axis L1 and a second rotation axis L2. It will be understood that in another embodiment, the first rotation axis L1 and the second rotation axis L2 are perpendicular to each other.

It will be understood that the worm 30 is in transmission connection with the worm gear 40, so that the worm 30 rotates under the action of an external driving force and drives the worm gear 40 to rotate, thereby implementing a transmission function of the transmission apparatus 100 provided by this application. In some other embodiments, the external driving force may directly drive the worm gear 40 to rotate, so that the worm gear 40 drives the worm 30 to rotate.

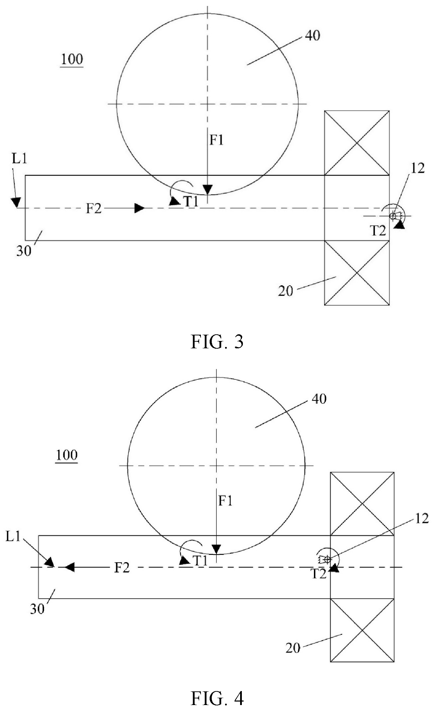

Specifically, referring to FIG. 3, FIG. 3 is a diagram of analysis of force on a transmission apparatus 100 provided in an embodiment of this application. For ease of reference, in FIG. 3 and subsequent diagrams of analysis of force, description of the support 10 is omitted, and the bearing 20, the worm 30, and the worm gear 40 are simplified. In addition, an abutting portion 12 is also simplified, to facilitate description of a positional relationship between the abutting portion 12 and the first rotation axis L1. As shown in FIG. 1 and FIG. 3, the support 10 is further provided with an abutting portion 12. The abutting portion 12 extends to the outer ring 22 of the bearing 20 in the direction of the first rotation axis L1 of the worm 30, and abuts against the outer ring 22 of the bearing 20.

As shown in FIG. 3, when the worm 30 and the worm gear 40 rotate cooperatively, a force applied by the worm gear 40 on the worm 30 causes the worm 30 to generate a deflection moment. A force generated by the deflection moment acts on the bearing 20 and causes axial displacement of the bearing 20. In addition, the deflection moment further cooperates with the bearing 20 to cause radial displacement of the worm 30.

There is a distance between an action line of the force driving the worm 30 to generate the axial displacement and an arrangement position of the abutting portion 12. The abutting portion 12 provides a reactive force to support the bearing 20. Because the abutting portion 12 is not located at a central axis of the bearing 20, but is located at a distance from the central axis of the bearing 20, the support force provided by the abutting portion 12 for the bearing 20 is eccentric. The eccentric force generates a clockwise moment on the bearing 20 while balancing or resisting an axial force of the bearing 20. The ratio of the moment to the axial force of the worm 30 can be varied by adjusting the position of the abutting portion 12 to vary the distance between the abutting portion 12 and a central axis of the bearing 20. Therefore, the magnitude of the moment is changed, and a downward radial force applied by the worm gear 40 on the worm 30 can be counteracted or resisted by adjusting the moment is adjusted to a proper magnitude, thereby ensuring that the worm is in tight contact with the worm gear and does not generate a displacement clearance due to the radial force.

Specifically, as shown in FIG. 1 and FIG. 3, when the worm 30 and the worm gear 40 are in meshing transmission, the worm gear 40 has a radial force F1 and an axial force F2 that act on the worm 30. Because only one side of the worm 30 extends into the support 10 and limits the radial displacement of the worm 30 under the action of the support 10, it will be understood that under the action of the radial force F1, the worm 30 tends to rotate around the support 10 toward a direction away from the worm gear 40 and generate radial displacement, resulting in an increase in a mating clearance between the worm gear 40 and the worm 30. When the mating clearance between the worm gear 40 and the worm 30 is too large, transmission between the worm 30 and the worm gear 40 may be affected, and may even lead to a situation where the worm 30 or worm gear 40 cannot drive the corresponding worm gear 40 or worm 30 to rotate. The radial force F1 can be converted into first deflection moment T1 that causes the worm 30 to rotate away from the worm gear 40.

Because the abutting portion 12 abuts against the outer ring 22 of the bearing 20, and the worm 30 extends into the inner ring 21 of the bearing 20, it will be understood that there is a distance between the abutting portion 12 and the first rotation axis L1 of the worm 30. As shown in FIG. 3, the axial force F2 applied by the worm gear 40 on the worm 30 is transmitted to the abutting portion 12 along the first rotation axis L1, which can cooperate with the abutting portion 12 to form a second deflection moment T2 that causes the worm 30 to rotate toward a direction close to the worm gear 40 while limiting the axial displacement of the bearing 20. The second deflection moment T2 is greater than or equal to the first deflection moment T1.

As shown in FIG. 3, the first deflection moment T1 and the second deflection moment T2 are opposite in direction, so that the second deflection moment T2 can counteract the first deflection moment T1, thereby ensuring that the mating clearance between the worm 30 and the worm gear 40 is relatively small during meshing transmission of the worm 30 and the worm gear 40. Therefore, transmission accuracy of the transmission apparatus 100 provided by this application is improved.

FIG. 4 is another diagram of analysis of force on a transmission apparatus provided in an embodiment of this application. As shown in FIG. 4, in another embodiment, the abutting portion 12 may be disposed on a side of the bearing 20 that is close to the worm gear 40, and abuts against a corresponding end face of the bearing 20. The axial force F2 applied by the worm gear 40 on the worm 30 is directed away from the abutting portion 12 along the first rotation axis L1. The radial force F1 applied by the worm gear 40 on the worm 30 can cause the worm 30 to tend to move toward a direction away from the worm gear 40 and generate radial displacement. It will be understood that the axial force F2 can also cooperate with the abutting portion 12 to form the second deflection moment T2 that causes the worm 30 to rotate toward a direction close to the worm gear 40, to counteract the first deflection moment T1 formed by cooperation of the radial force F1 and the support 10, ensuring the mating clearance between the worm 30 and the worm gear 40.

Therefore, in the transmission apparatus 100 provided by this application, by disposing the abutting portion 12 capable of abutting against the outer ring 22 of the bearing 20, when the worm 30 and the worm gear 40 are in meshing transmission and generate a deflection moment, the abutting portion 12 can mate with the bearing 20 to generate a reverse deflection moment, to limit the radial displacement of the worm 30, thereby ensuring the mating clearance between the worm 30 and the worm gear 40, and improving transmission accuracy of the transmission apparatus 100 provided by this application.

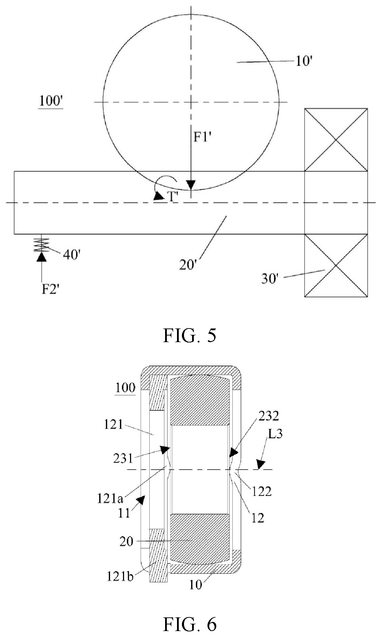

Referring to FIG. 5, FIG. 5 is a diagram of analysis of force on a transmission apparatus 100' according to a conventional technology.

As shown in FIG. 5, in conventional technology, a transmission apparatus 100' includes a worm gear 10', a worm 20', a bearing 30', and a spring 40'. One end of the worm 20' extends into the bearing 30', and the other end is in transmission connection with the worm gear 10'. The spring 40' is fastened to a housing (not shown) of the transmission apparatus 100', and the spring 40' is disposed on a side of the worm 20' that is away from the worm gear 10', and abuts against the worm gear 10'.

When the worm gear 10' and the worm 20' are in meshing transmission, a radial force F1' applied by the worm gear 10' on the worm 20' applies a deflection moment T' to the worm 20', causing the worm 20' to flip toward a direction away from the worm gear 10'. An elastic force F2' provided by the spring 40' is opposite in direction to the radial force F1', to counteract the radial force F1' and ensure a mating clearance between the worm gear 10' and the worm 20'.

However, in the conventional technology, to adapt to different operating conditions, the rotational moment transmitted by the worm gear 10' or the worm 20' may vary significantly. However, due to a limited elastic force range, the spring 40' cannot provide reliable elastic force feedback under all operating conditions, so that under some operating conditions, the force applied by the worm gear 10' on the worm 20' does not match the force applied by the spring 40' on the worm 20', and the worm 20' may move toward a direction away from or close to the worm gear 10', thereby increasing or decreasing the mating clearance between the worm 20' and the worm gear 10', and affecting transmission accuracy of the worm gear 10' and the worm 20'.

Therefore, in the transmission apparatus 100 provided by this application, by disposing the abutting portion 12 that abuts against the outer ring 22 of the bearing 20 in the direction of the first rotation axis L1 of the worm 30, when the worm 30 and the worm gear 40 rotates cooperatively and generate a deflection moment, through an abutting effect against the bearing 20, the abutting portion 12 can cooperate with a force capable of causing the bearing 20 to generate axial displacement to form a reverse deflection moment that can counteract the radial displacement of the worm 30, thereby limiting the mating clearance between the worm gear 40 and the worm 30.

Because in the transmission apparatus 100 provided by this application, the first deflection moment T1 and the second deflection moment T2 acting on the worm 30 are respectively provided by the radial force F1 and the axial force F2, and the magnitudes of the radial force F1 and the axial force F2 are related to a rotational moment of the worm gear 40. It will be understood that when the rotational moment transmitted by the worm gear 40 or the worm 30 varies, the magnitudes of the radial force F1 and the axial force F2 also vary, and correspondingly, the first deflection moment T1 and the second deflection moment T2 also vary. Furthermore, the second deflection moment T2 varies synchronously with the variation of the first deflection moment T1.

It will be understood that compared with the deflection moment provided by an elastic force of the spring 40' in the conventional technology, the arrangement of the abutting portion 12 in the transmission apparatus 100 provided by this application ensures that the second deflection moment T2 can also vary with the variation of the first deflection moment T1 when the rotational moment of the worm gear 40 varies, and can counteract the first deflection moment T1, preventing the worm 30 from flipping relative to the support 10. Therefore, the mating clearance between the worm 30 and the worm gear 40 is ensured, and transmission accuracy of the transmission apparatus 100 provided by this application is improved.

Referring to FIG. 6, FIG. 6 is a diagram of a partial cross-section structure of a transmission apparatus 100 provided in an embodiment of this application.

As shown in FIG. 6, the abutting portion 12 includes a first abutting portion 121 and a second abutting portion 122. The bearing 20 is provided with a first end face 231 and a second end face 232 in the direction of the third rotation axis L3 of the bearing 20, and the first end face 231 is closer to the worm gear 40 (not shown in the figure) than the second end face 232. The first abutting portion 121 abuts against the first end face 231 of the bearing 20, and the second abutting portion 122 abuts against the second end face 232 of the bearing 20, so that the bearing 20 is limited between the first abutting portion 121 and the second abutting portion 122 in the direction of the third rotation axis L3. Therefore, the axial displacement of the bearing 20 is limited.

As shown in FIG. 6, in an arrangement direction of the worm gear 40 and the worm 30, the first abutting portion 121 is closer to the second rotation axis L2 (not shown in the figure) of the worm gear 40 than the second abutting portion 122.

Both the worm 30 and the bearing 20 are rotary structures. It will be understood that when a position of the worm gear 40 varies in a circumferential direction of the worm 30, in the arrangement direction of the worm gear 40 and the worm 30, the first abutting portion 121 or the second abutting portion 122 may coincide with the first rotation axis L1.

Therefore, by disposing the first abutting portion 121 and the second abutting portion 122 at different distances from the second rotation axis L2 in the arrangement direction of the worm gear 40 and the worm 30, it is possible to avoid the situation that both the first abutting portion 121 and the second abutting portion 122 coincide with the first rotation axis L1 when the arrangement direction of the worm gear 40 varies.

Based on the fact that the abutting portion 121 abuts against the outer ring 22 of the bearing 20, it will be understood that both the first abutting portion 121 and the second abutting portion 122 can cooperate with the axial force F2 to form the second deflection moment T2. Therefore, in the arrangement direction of the worm gear 40 and the worm 30, the first abutting portion 121 and the second abutting portion 122 are spaced apart, which can ensure formation of the second deflection moment T2, to counteract the first deflection moment T1 applied by the radial force F1 of the worm gear 40 on the worm 30. This prevents the worm 30 from flipping around the bearing 20, ensuring the mating clearance between the worm 30 and the worm gear 40.

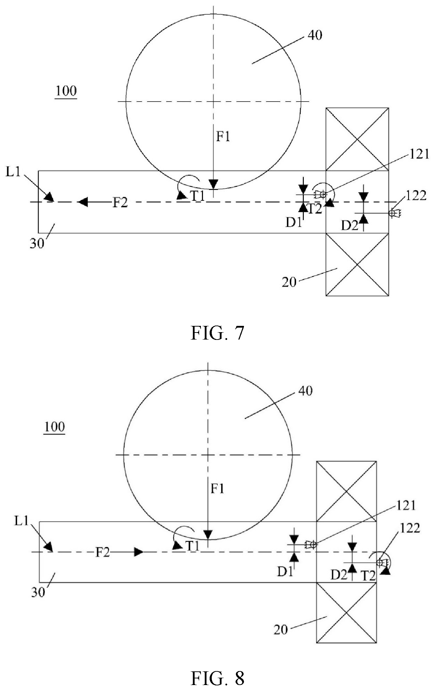

Specifically, in combination with FIG. 6, referring to FIG. 7, which is still another diagram of analysis of force on a transmission apparatus 100 provided in an embodiment of this application, and referring to FIG. 8, which is yet another diagram of analysis of force on a transmission apparatus 100 provided in an embodiment of this application. FIG. 7 and FIG. 8 are both the diagrams of analysis of force on the transmission apparatus 100 provided by this application using structures of the first abutting portion 121 and the second abutting portion 122 shown in FIG. 6.

As shown in FIG. 6 to FIG. 8, in the arrangement direction of the worm gear 40 and the worm 30, the first abutting portion 121 is closer to the second rotation axis L2 (not shown in the figure) than to the first rotation axis L1, and the second abutting portion 122 is farther away from the second rotation axis L2 than from the first rotation axis L1.

As shown in FIG. 7, rotation directions of the worm gear 40 and the worm 30 may vary in a meshing transmission process. It will be understood that when the rotation direction of the worm gear 40 or the worm 30 varies, a direction of the axial force F2 applied by the worm gear 40 on the worm 30 also varies accordingly.

When the direction of the axial force F2 applied by the worm gear 40 on the worm 30 is a direction away from the bearing 20, the axial force F2 causes the outer ring 22 of the bearing 20 to press against the first abutting portion 121. That is, the outer ring 22 of the bearing 20 mainly receives a reactive force from the first abutting portion 121 in the direction of the third rotation axis L3 of the bearing 20.

The first abutting portion 121 is relatively close to the worm gear 40, and has a distance from the third rotation axis L3. Therefore, the axial force F2 causes the worm 30 to tend to flip toward a direction close to the worm gear 40. That is, under the action of the axial force F2 and the first abutting portion 121, the worm 30 has the second deflection moment T2 that cause the worm 30 to flip toward a direction close to the worm gear 40.

The second deflection moment T2 can counteract influence of the first deflection moment T1 on the worm 30, thereby ensuring the mating clearance between the worm 30 and the worm gear 40, and improving transmission accuracy of the transmission apparatus 100 provided by this application.

In addition, as shown in FIG. 8, when the direction of the axial force F2 applied by the worm gear 40 on the worm 30 is a direction close to the bearing 20, the axial force F2 can cause the outer ring 22 of the bearing 20 to press against the second abutting portion 122. It will be understood that the outer ring 22 of the bearing 20 mainly receives an acting force from the second abutting portion 122 in the direction of the third rotation axis L3 of the bearing 20.

The second abutting portion 122 is relatively away from the worm gear 40, and has a distance from the third rotation axis L3. Therefore, the axial force F2 causes the worm 30 to tend to flip toward a direction close to the worm gear 40. That is, under the action of the axial force F2 and the second abutting portion 122, the worm 30 also has the second deflection moment T2 that flips toward a direction close to the worm gear 40.

The second deflection moment T2 can counteract influence of the first deflection moment T1 on the worm 30, thereby ensuring the mating clearance between the worm 30 and the worm gear 40, and improving transmission accuracy of the transmission apparatus 100 provided by this application.

Therefore, in the transmission apparatus 100 provided by this application, by disposing the first abutting portion 121 and the second abutting portion 122 on two opposite sides of the first rotation axis L1, when the rotation direction of the worm gear 40 varies, it is also possible to ensure the mating clearance between the worm 30 and the worm gear 40. Therefore, applicable operating conditions of the transmission apparatus 100 provided by this application are improved.

In another embodiment, when the rotation direction of the worm gear 40 or the worm 30 remains unvaried, and the direction of the axial force F2 applied by the worm gear 40 on the worm 30 is a direction away from the bearing 20, in the arrangement direction of the worm gear 40 and the worm 30, both the first abutting portion 121 and the second abutting portion 122 are closer to the second rotation axis L2 than to the first rotation axis L1. Correspondingly, the axial force F2 applied by the worm gear 40 on the worm 30 can cause the first abutting portion 121 to abut against the first end face 231. The second abutting portion 122 is configured to mate with the first abutting portion 121 to limit an axial position of the bearing 20.

In addition, in another embodiment, when the rotation direction of the worm gear 40 or the worm 30 remains unvaried, and the direction of the axial force F2 applied by the worm gear 40 on the worm 30 is a direction close to the bearing 20, in the arrangement direction of the worm gear 40 and the worm 30, both the first abutting portion 121 and the second abutting portion 122 are farther away from the second rotation axis L2 than from the first rotation axis L1. This is not specifically limited in this application.

As shown in FIG. 7 and FIG. 8, in an embodiment, there is a first distance D1 between the first abutting portion 121 and the third rotation axis L3 of the bearing 20. There is a second distance D2 between the second abutting portion 122 and the third rotation axis L3 of the bearing 20. The first distance D1 is less than or equal to the second distance D2.

In the direction of the first rotation axis L1, a distance between the second abutting portion 122 and the second rotation axis L2 is longer than a distance between the first abutting portion 121 and the second rotation axis L2. So that the magnitude of the rotational moment is not only related to the magnitude of the force, but also related to a vertical distance from an action line of the force to the rotation axis.

It will be understood that under the action of the same radial force F1, a first deflection moment T1 generated by the worm 30 around the first abutting portion 121 is less than a first deflection moment T1 generated by the worm 30 around the second abutting portion 122. Correspondingly, a second deflection moment T2 generated by cooperation of the axial force F2 and the first abutting portion 121 should be less than a second deflection moment T2 generated by cooperation of the axial force F2 and the second abutting portion 122.

Because the magnitude of the axial force F2 varies synchronously with the magnitude of the radial force F1, setting the second distance D2 greater than or equal to the first distance D1 can ensure that the second deflection moment T2 generated by the cooperation of the axial force F2 and the second abutting portion 122 counteracts the corresponding first deflection moment T1. Therefore, a limiting effect of the second abutting portion 122 on the radial displacement of the worm 30 is ensured, and the mating clearance between the worm 30 and the worm gear 40 is ensured.

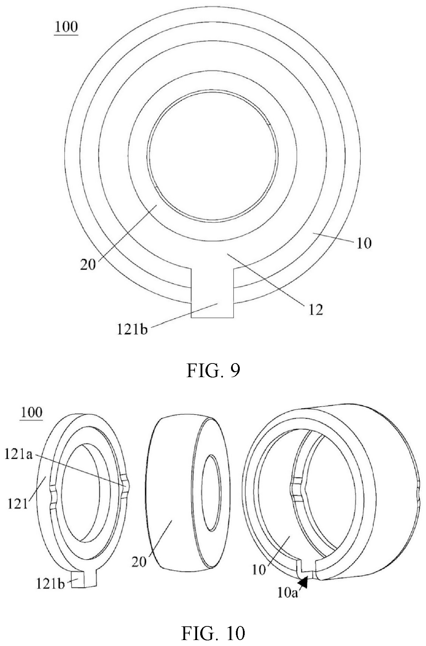

In combination with FIG. 6, referring to FIG. 9. FIG. 9 is a partial main view of a transmission apparatus 100 provided in an embodiment of this application. Further referring to FIG. 10. FIG. 10 is a partial exploded view of a transmission apparatus 100 provided in an embodiment of this application.

As shown in FIG. 6, the first abutting portion 121 may be detachably connected to the support 10, so that in a process of manufacturing the support 10, the first abutting portion 121 can be separately manufactured, thereby reducing manufacturing complexity of the support 10. The first abutting portion 121 includes a first axial protrusion member 121a and a first radial protrusion member 121b. As shown in FIG. 9 and FIG. 10, the first abutting portion 121 is of a ring structure, and the first axial protrusion member 121a extends toward the first end face 231 of the bearing 20 along the third rotation axis L3 to abut against the first end face 231. The first radial protrusion member 121b protrudes in the radial direction.

The support 10 is provided with a mounting groove 10a that mates with the first radial protrusion member 121b. The first radial protrusion member 121b is accommodated in the mounting groove 10a, to fasten a position of the first abutting portion 121.

As shown in FIG. 10, in an embodiment, there are two first axial protrusion members 121a. In the arrangement direction of the worm gear 40 and the worm 30, the two first axial protrusion members 121a are located on the same side of the third rotation axis L3, and the two first axial protrusion members 121a are equidistant from the third rotation axis L3.

It will be understood that as shown in FIG. 10, by disposing the two first axial protrusion members 121a, when the worm gear 40 and the worm 30 are in meshing transmission, forces applied by the two first axial protrusion members 121a to the first end face 231 of the bearing 20 can be relatively uniform. In addition, when the worm gear 40 and the worm 30 are in meshing transmission and generate a deflection moment, mutual mating of the two first axial protrusion members 121a can prevent the deflection moment formed by cooperation of the axial force F2 and the single first axial protrusion member 121a from being directed toward other directions, thereby ensuring a limiting effect of the first abutting portion 121 on the radial displacement of the worm 30.

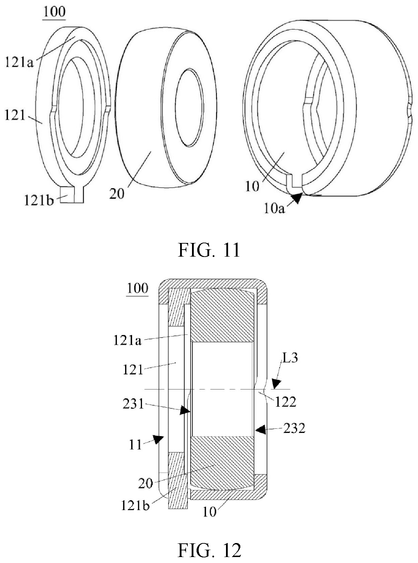

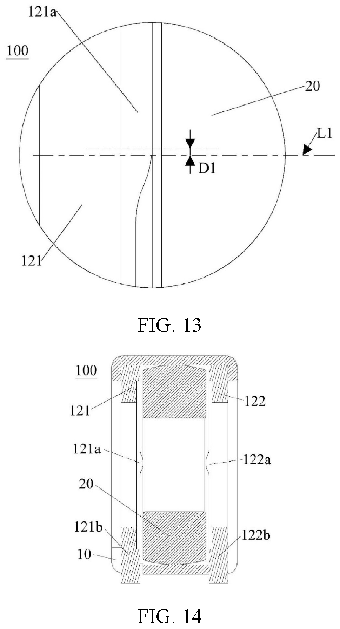

Referring to FIG. 11, which is another partial cross-sectional view of a transmission apparatus 100 provided in an embodiment of this application. Referring to FIG. 12, FIG. 12 is another partial cross-sectional view of a transmission apparatus 100 provided in an embodiment of this application. Referring to FIG. 13, FIG. 13 is a partial enlarged view of a transmission apparatus 100 provided in an embodiment of this application.

As shown in FIG. 11 to FIG. 13, the first axial protrusion members 121a are arc-shaped structures. The axial protrusion members are located on one side of the rotation axis of the bearing, and are circumferentially arranged around the third rotation axis L3, to increase an abutting area with the outer ring 22 of the bearing 20, thereby ensuring an abutting effect of the first abutting portion 121 against the outer ring 22 of the bearing 20. As shown in FIG. 13, there is a first distance D1 between the first axial protrusion member 121a and the third rotation axis L3.

It will be understood that as shown in FIG. 14, in some other embodiments, the second abutting portion 122 may also be detachably connected to the support 10. Correspondingly, the second abutting portion 122 also includes a second axial protrusion member 122a and a second radial protrusion member 122b. The second axial protrusion member 122a extends toward the bearing 20 and abuts against the bearing 20. The second radial protrusion member 122b mates with a mounting position (not shown in the figure) on the support 10, to relatively fasten the second abutting portion 122.

The second axial protrusion member 122a may also be disposed in a configuration similar to the first axial protrusion member 121a shown in FIG. 10, FIG. 11, and FIG. 12, which is not particularly limited in this application.

In an embodiment, the transmission apparatus 100 provided by this application further includes a buffer member. The buffer member is filled between the bearing 20 and the support 10. When the worm 30 and the worm gear 40 are in meshing transmission, the worm 30 may generate vibration. The vibration may be transmitted to the bearing 20, causing friction between the bearing 20 and the support 10, and thus generating noise.

The buffer member can absorb vibration between the bearing 20 and the support 10, thereby avoiding mutual friction between the bearing 20 and the support 10 caused by vibration, reducing the noise generated during an operating process of the transmission apparatus 100 provided by this application, and improving user experience.

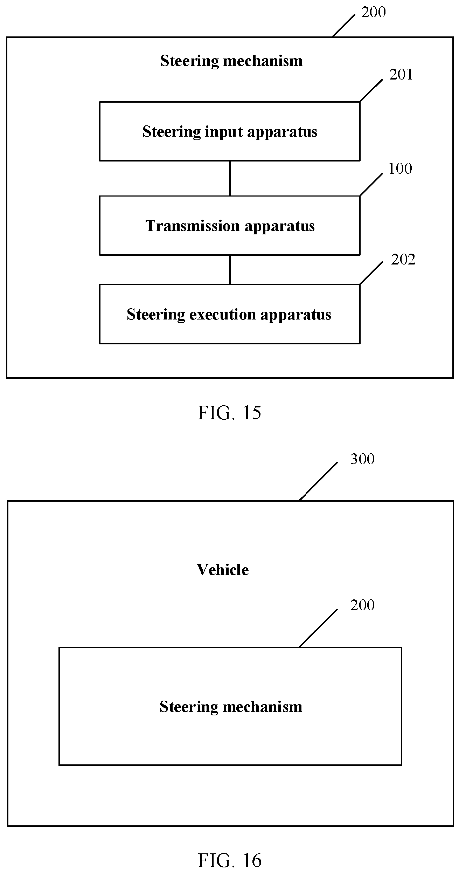

As shown in FIG. 15, in an embodiment, a steering mechanism 200 includes a steering input apparatus 201, a steering execution apparatus 202, and a transmission apparatus 100. The transmission apparatus 100 provided by this application can be used in the steering mechanism 200 of a vehicle 300, to improve steering efficiency of the steering mechanism by relying on relatively high transmission efficiency of the transmission apparatus 100 provided by this application.

As shown in FIG. 16, in an embodiment, the steering mechanism 200 provided by this application can be used in the vehicle 300, to improve steering efficiency of a vehicle 300.

It will be understood that the terms "first" and "second" mentioned below are merely intended for a purpose of description, and will not be understood as an indication or implication of relative importance or implicit indication of a quantity of indicated technical features. Therefore, a feature limited by "first" and "second" may explicitly or implicitly include one or a plurality of features. In the descriptions of implementations of this application, unless otherwise expressly limited, "a plurality of" means two or more.

In the description of this specification, descriptions referring to the terms "an implementation", "some implementations", "exemplary implementations", "examples", "specific examples", or "some examples" mean that specific features, structures, materials, or characteristics described in connection with the implementation or example are included in at least one implementation or example of this application. In this specification, the schematic representations of the foregoing terms are not necessarily aimed at the same implementation or example. Moreover, specific features, structures, materials or characteristics described may be combined in any one or a plurality of implementations or examples in a suitable manner.

It will be understood that the application of this application is not limited to the foregoing examples, and person of ordinary skill in the art may make improvements or alterations according to the foregoing description, and all such improvements and alterations will fall within the protection scope of the appended claims. Person of ordinary skill in the art may understand that implementing all or part of the processes of the foregoing embodiment and making equivalent changes according to the claims of this invention still fall within the scope of this invention.

## Claims

1. A transmission apparatus (100), comprising a support (10), a bearing (20), a worm (30), and a worm gear (40), the bearing (20) being disposed in an inner hole (11) of the support, the worm (30) extending into an inner ring (21) of the bearing (20), and the worm (30) being in transmission connection with the worm gear (40),
the support (10) being further provided with an abutting portion (12), the abutting portion (12) being capable of abutting against an outer ring (22) of the bearing (20) in a direction of a rotation axis of the worm (30), and the abutting portion (12) being configured to limit radial displacement generated during mating transmission of the worm (30) and the worm gear (40), to ensure a mating clearance between the worm gear (40) and the worm (30).

2. The transmission apparatus (100) according to claim 1, wherein the abutting portion (12) comprises a first abutting portion (121) and a second abutting portion (122), the first abutting portion (121) abuts against an end face of the bearing (20) that is close to the worm gear (40), and the second abutting portion (122) abuts against an end face of the bearing (20) that is away from the worm gear.

3. The transmission apparatus (100) according to claim 2, wherein in an arrangement direction of the worm gear (40) and the worm (30), the first abutting portion (121) is closer to a rotation axis of the worm gear (40) than to the rotation axis of the worm (30).

4. The transmission apparatus (100) according to claim 2, wherein in an arrangement direction of the worm gear (40) and the worm (30), the second abutting portion (122) is farther away from a rotation axis of the worm gear (40) than from the rotation axis of the worm (30).

5. The transmission apparatus (100) according to claim 2, wherein in an arrangement direction of the worm gear (40) and the worm (30), the first abutting portion (121) is closer to a rotation axis of the worm gear (40) than the second abutting portion (122).

6. The transmission apparatus (100) according to claim 5, wherein there is a first distance (D1) between the first abutting portion (121) and a rotation axis of the bearing (20), there is a second distance (D2) between the second abutting portion (122) and the rotation axis of the bearing (20), and the first distance (D1) is less than or equal to the second distance (D2).

7. The transmission apparatus (100) according to any one of claims 1 to 6, wherein the abutting portion (12) is of a ring structure, the abutting portion (12) comprises an axial protrusion member, the axial protrusion member extends along the rotation axis of the bearing (20) toward an end face of the bearing (20) and abuts against an end face of the outer ring (22) of the bearing (20), to limit the radial displacement generated during meshing transmission of the worm (30) and the worm gear (40).

8. The transmission apparatus (100) according to claim 7, wherein there are two axial protrusion members, in the arrangement direction of the worm gear (40) and the worm (30), the two axial protrusion members are located on a same side of the rotation axis of the bearing (20), and distances between the two axial protrusion members and the rotation axis of the bearing (20) are equal.

9. The transmission apparatus (100) according to claim 7, wherein the axial protrusion member is arc-shaped, and the axial protrusion member is located on a side of the rotation axis of the bearing (20) and circumferentially arranged around the rotation axis of the bearing (20).

10. The transmission apparatus (100) according to claim 7, wherein the abutting portion (12) further comprises a radial protrusion member, the radial protrusion member protrudes in a radius direction of the bearing (20), the support is further provided with a mounting groove (10a), and the radial protrusion member is accommodated in the mounting groove (10a), to fasten a position of the abutting portion (12) on the support (10).

11. The transmission apparatus (100) according to any one of claims 1 to 10, wherein the abutting portion (12) is detachably connected to the support (10).

12. The transmission apparatus (100) according to any one of claims 1 to 11, wherein the transmission apparatus (100) further comprises a buffer member, the buffer member is filled between the bearing (20) and the support (10), and the buffer member is configured to absorb vibration between the bearing (20) and the support (10).

13. A steering mechanism (200), comprising a steering input apparatus (201), a steering execution apparatus (202), and the transmission apparatus (100) according to any one of claims 1 to 12, the steering input apparatus (201) being in transmission connection with the worm (30) of the transmission apparatus (100), and the steering execution apparatus (202) being in transmission connection with the worm gear (40) of the transmission apparatus (100).

14. A vehicle (300), comprising the steering mechanism (200) according to claim 13.
